# EUROPEAN PATENT APPLICATION

(11) **EP 4 163 855 A1**
(43) Date of publication of application: **12.04.2023**
(21) Application number: 21817790.5
(22) Date of filing: 02.04.2021
(51) Int. Cl.: G06Q 20/38, G06Q 20/02, G06Q 20/06, G06Q 20/36, G06F 16/182, G06F 16/27

(54) **ELECTRONIC WALLET, SERVER FOR EXECUTING SAME, AND ATOMIC EXCHANGE METHOD OF BLOCKCHAIN TOKENS BY USING SAME SERVER**

(30) Priority: 03.06.2020 KR 20200066895; 03.06.2020 KR 20200066902; 03.06.2020 KR 20200066908
(71) Applicant: Sovereign Wallet Co., Ltd., Seoul 08208 (KR)
(72) Inventor: YUN, Seok Gu, Seoul 08208 (KR)
(74) Representative: Viering, Jentschura & Partner mbB Patent- und Rechtsanwälte
(86) International application number: PCT/KR2021/004165
(87) International publication number: WO 2021/246632

(57) **Abstract**

Provided is an operation method of a server relaying token exchange. The operation method includes receiving, from a first computing device, first token remittance information for remittance of a first token used in a first blockchain network; receiving, from a second computing device, second token remittance information for remittance of a second token used in a second blockchain network; determining whether exchange agreement coincides between the first token and the second token, based on the first token remittance information and the second token remittance information; and transmitting the first token remittance information to the second computing device and the second token remittance information to the first computing device when the exchange agreement is determined to coincide between the first and second tokens.

## Description

### TECHNICAL FIELD

The present invention relates to an electronic wallet, and more particularly, to a server for executing an electronic wallet and a method for atomic exchange of different blockchain tokens using the server.

### BACKGROUND ART

A blockchain is ledger management technology based on distributed computing, in which small data, called blocks, of managed data are stored in a chain-type, link-based distributed data storage environment created based on a peer-to-peer (P2P) method so that no one can randomly modify the managed data and any one can read a changed result.

A blockchain (or a blockchain system) includes an unforgeable and irreversible database system and a blockchain address created by a user through public-key cryptography.

Transaction information recorded in a blockchain includes remittance information transmitted from one blockchain address to another blockchain address. To ensure the anonymity of a transaction, a blockchain records only the transaction history between blockchain addresses including numbers, and information about the owner of each of the blockchain addresses is not recorded.

### DESCRIPTION OF EMBODIMENTS

### TECHNICAL PROBLEM

Conventionally, when one of two users is in a first blockchain network and the other one is in a second blockchain network, the two users may not securely exchange their tokens with each other because they are not in the same blockchain.

Provided are a method of enabling two users to securely exchange their tokens with each other even when the two users are respectively in different blockchain networks, an electronic wallet for performing the method, a server for executing the electronic wallet, and a method of providing a token exchange service by using the server.

### SOLUTION TO PROBLEM

According to embodiments of the present disclosure, an operation method of a server relaying token exchange includes receiving, from a first computing device, first token remittance information for remittance of a first token used in a first blockchain network; receiving, from a second computing device, second token remittance information for remittance of a second token used in a second blockchain network; determining whether exchange agreement coincides between the first token and the second token, based on the first token remittance information and the second token remittance information; and transmitting the first token remittance information to the second computing device and the second token remittance information to the first computing device when the exchange agreement is determined to coincide between first and second tokens.

A program is stored in a computer-readable medium to execute the operation method of a server relaying token exchange on a computer.

According to embodiments of the present disclosure, an electronic wallet stored in a computer-readable medium is configured to receive, from a first computing device, first token remittance information for remittance of a first token used in a first blockchain network; receive, from a second computing device, second token remittance information for remittance of a second token used in a second blockchain network; determine whether exchange agreement coincides between the first token and the second token, based on the first token remittance information and the second token remittance information; and transmit the first token remittance information to the second computing device and the second token remittance information to the first computing device when the exchange agreement is determined to coincide between the first and second tokens.

According to embodiments of the present disclosure, a server includes a processor and a computer-readable medium storing a program for executing an operation method of a server relaying token exchange.

According to embodiments of the present disclosure, a method of providing a token exchange relay service by using a relay server includes receiving, by the relay server, first token remittance information for remittance of a first token from a first computing device, the first token being used in a first blockchain network; receiving, by the relay server, second token remittance information for remittance of a second token from a second computing device, the second token being used in a second blockchain network; determining, by the relay server, whether exchange agreement coincides between the first token and the second token, based on the first token remittance information and the second token remittance information; and transmitting, by the relay server, the first token remittance information to the second computing device and the second token remittance information to the first computing device, when the exchange agreement is determined to coincide between the first and second tokens.

According to embodiments of the present disclosure, an operation method of a server relaying token exchange includes receiving, from a first computing device, first token remittance information for remittance of a first token used in a first blockchain network; receiving, from a second computing device, second token remittance information for remittance of a second token used in a second blockchain network; determining whether exchange agreement coincides between the first token and the second token, based on the first token remittance information and the second token remittance information; and publishing the first token remittance information and the second token remittance information respectively on the first blockchain network and the second blockchain network when the exchange agreement is determined to coincide between the first and second tokens.

A program may be stored in a computer-readable medium to execute the operation method of a server relaying token exchange on a computer.

According to embodiments of the present disclosure, an electronic wallet stored in a computer-readable medium is configured to receive, from a first computing device, first token remittance information for remittance of a first token used in a first blockchain network; receive, from a second computing device, second token remittance information for remittance of a second token used in a second blockchain network; determine whether exchange agreement coincides between the first token and the second token, based on the first token remittance information and the second token remittance information; and publish the first token remittance information and the second token remittance information respectively on the first blockchain network and the second blockchain network when the exchange agreement is determined to coincide between the first and second tokens.

According to embodiments of the present disclosure, a server includes a processor and a computer-readable medium storing a program for executing an operation method of a server relaying token exchange.

According to embodiments of the present disclosure, a method of providing a token exchange relay service by using a relay server includes receiving, by the relay server, first token remittance information for remittance of a first token from a first computing device, the first token being used in a first blockchain network; receiving, by the relay server, second token remittance information for remittance of a second token from a second computing device, the second token being used in a second blockchain network; determining, by the relay server, whether exchange agreement coincides between the first token and the second token, based on the first token remittance information and the second token remittance information; and publishing, by the relay server, the first token remittance information and the second token remittance information respectively on the first blockchain network and the second blockchain network, when the exchange agreement is determined to coincide between the first and second tokens.

According to embodiments of the present disclosure, an operation method of a server relaying token exchange includes receiving, from a first computing device, a first message including first token sender information, first token receiver information, and a first token; monitoring whether first remittance information is published on a first blockchain network and reading the first remittance information from the first blockchain network as a result of the monitoring, the first remittance information including the first token sender information, first identification information of the server, and the first token; transmitting the first message to a second computing device, based on the first token receiver information included in the first message; and receiving a first acknowledgement signal generated by the second computing device based on an input of a second user verifying the first message.

A program is stored in a computer-readable medium to execute the operation method of a server relaying token exchange on a computer.

According to embodiments of the present disclosure, an electronic wallet stored in a computer-readable medium includes instructions for allowing a computing device to perform operations. The operations include an operation of receiving, from a first computing device, a first message including first token sender information, first token receiver information, and a first token; an operation of monitoring whether first remittance information is published on a first blockchain network and reading the first remittance information from the first blockchain network as a result of the monitoring, the first remittance information including the first token sender information, first identification information of a server, and the first token; transmitting the first message to a second computing device, based on the first token receiver information included in the first message; and receiving a first acknowledgement signal generated by the second computing device based on an input of a second user verifying the first message.

According to embodiments of the present disclosure, a server includes a processor and a computer-readable medium storing a program for executing an operation method of a server relaying token exchange.

According to embodiments of the present disclosure, a method of providing a token exchange relay service by using a relay server includes receiving, by the relay server, a first message from a first computing device, the first message including first token sender information, first token receiver information, and a first token; monitoring, by the relay server, whether first remittance information is published on a first blockchain network and reading, by the relay server, the first remittance information from the first blockchain network as a result of the monitoring, the first remittance information including the first token sender information, first identification information of the relay server, and the first token; transmitting, by the relay server, the first message to a second computing device, based on the first token receiver information included in the first message; and receiving, by the relay server, a first acknowledgement signal generated by the second computing device based on an input of a second user verifying the first message.

### ADVANTAGEOUS EFFECTS OF DISCLOSURE

Conventionally, when one of two users is in a first blockchain network and the other one is in a second blockchain network, the two users may not securely exchange their tokens with each other because they are not in the same blockchain.

When an electronic wallet, a server for executing the same, and a method for atomic exchange of blockchain tokens using the server, according to the present disclosure, are used, users may securely exchange their tokens with each other through the electronic wallet and the server. In other words, the server and the atomic exchange method may guarantee the simultaneous exchange of tokens that are to be exchanged.

### BRIEF DESCRIPTION OF DRAWINGS

FIG. 1 is a block diagram of a blockchain system according to an embodiment of the present disclosure.
FIG. 2 is a diagram for describing embodiments of the operations of electronic wallets included in the blockchain system of FIG. 1.
FIG. 3 is a diagram for describing embodiments of the operations of electronic wallets included in the blockchain system of FIG. 1.
FIG. 4 is a diagram for describing an embodiment of a method of exchanging different blockchain tokens by using the blockchain system of FIG. 1.
FIG. 5 is a diagram for describing another embodiment of a method of exchanging different blockchain tokens by using the blockchain system of FIG. 1.
FIG. 6 is a diagram for describing still another embodiment of a method of exchanging different blockchain tokens by using the blockchain system of FIG. 1.
FIG. 7 is a diagram for describing even another embodiment of a method of exchanging different blockchain tokens by using the blockchain system of FIG. 1.
FIG. 8 is a diagram for describing yet another embodiment of a method of exchanging different blockchain tokens by using the blockchain system of FIG. 1.
FIG. 9 is a diagram for describing a further embodiment of a method of exchanging different blockchain tokens by using the blockchain system of FIG. 1.
FIG. 10 is a diagram for describing a still further embodiment of a method of exchanging different blockchain tokens by using the blockchain system of FIG. 1.

### MODE OF DISCLOSURE

An electronic wallet or an e-wallet, which is known as a digital wallet, a smart wallet, a crypto wallet, or a blockchain wallet, refers to an electronic device, an online service, or software (or a program), which allows an individual (or individuals) to conduct electronic transactions, e.g., token buying, selling, sending, swapping, and/or tracking. An atomic swap of tokens using a server may refer to a guarantee of secure exchange (or simultaneous exchange) of the tokens through the server.

Electronic wallets 220, 320, and 620 refer to applications respectively executed by processors 210, 310, and 610 of respective computing devices 200, 300, and 600, and the applications refer to application software, computer programs, software, or apps but are not limited thereto.

The first computing device 200 includes a first input device (e.g., a keyboard, a touch pad, or a computer mouse) 201, a first output device 203, such as a monitor or a display, a first processor 210, and a first transceiver 230. The second computing device 300 includes a second input device (e.g., a keyboard, a touch pad, or a computer mouse) 301, a second output device 303, such as a monitor or a display, a second processor 310, and a second transceiver 330. The third computing device 600 includes a processor 610 and a transceiver 630.

Each of the computing devices 200 and 300 may refer to a desktop computer, a laptop computer, a mobile Internet device (MID), a smartphone, or an Internet of things (IoT) device but is not limited thereto. Each of the electronic wallets 220 and 320 is stored in a storage medium (e.g., a memory device) of a corresponding one of the computing devices 200 and 300 and is executed by a corresponding one of the processors 210 and 310, which may access the storage medium.

The computing device 600 may be a server (e.g., a relay server for the exchange of tokens), and the third electronic wallet 620 is stored in a storage medium (e.g., a memory device, a hard disk drive, a solid state drive (SSD), or a database), which is accessible by the server 600, and executed by the processor 610.

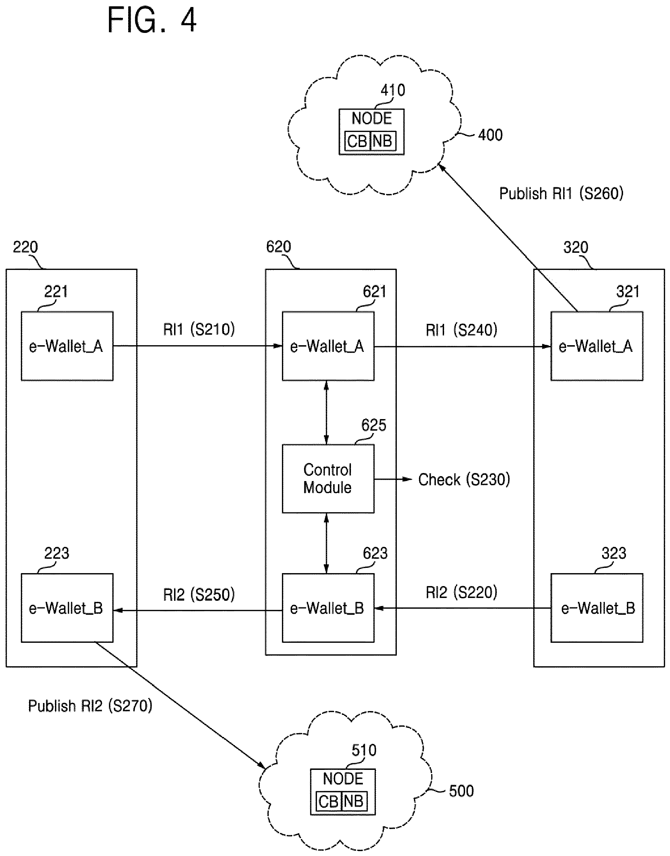

Each of the electronic wallets 220, 320, and 620 is an application stored in a readable storage medium. The application includes code or instructions for allowing a computing device to perform operations corresponding to the application among operations shown in FIGS. 4 to 10. Each of the electronic wallets 220, 320, and 620 is an application, which is stored in a readable storage medium and combines with hardware (e.g., a computing device or a processor mounted on the computing device) to enable secure exchange of tokens, which are respectively used in different blockchain networks, e.g., first and second blockchain networks 400 and 500.

Here, each of the electronic wallets 220, 320, and 620 refers to an application (or a program) performing a similar function to a banking application providing financial services.

A first address of a first user refers to unique information for identifying the first user in the first blockchain network 400 and is similar to first bank account information of the first user. A second address of the first user refers to unique information for identifying the first user in the second blockchain network 500 and is similar to second bank account information of the first user.

A first address of a second user refers to unique information for identifying the second user in the first blockchain network 400 and is similar to first bank account information of the second user. A second address of the second user refers to unique information for identifying the second user in the second blockchain network 500 and is similar to second bank account information of the second user.

When the first user sends a token (or a blockchain token) to the second user through the first blockchain network 400 and/or the relay server 600, the first address of the first user corresponds to a sender address (or referred to as "sender information"), and the first address of the second user corresponds to a receiver address (or referred to as "receiver information"). Contrarily, when the second user sends a token to the first user through the first blockchain network 400 and/or the relay server 600, the first address of the second user corresponds to a sender address, and the first address of the first user corresponds to a receiver address.

When the second user sends a token (or a blockchain token) to the first user through the second blockchain network 500 and/or the relay server 600, the second address of the second user corresponds to a sender address, and the second address of the first user corresponds to a receiver address. Contrarily, when the first user sends a token to the second user through the second blockchain network 500 and/or the relay server 600, the second address of the first user corresponds to a sender address, and the second address of the second user corresponds to a receiver address.

A token refers to electronic money, a digital currency, a cryptocurrency, a virtual currency, or a digital asset but is not limited thereto.

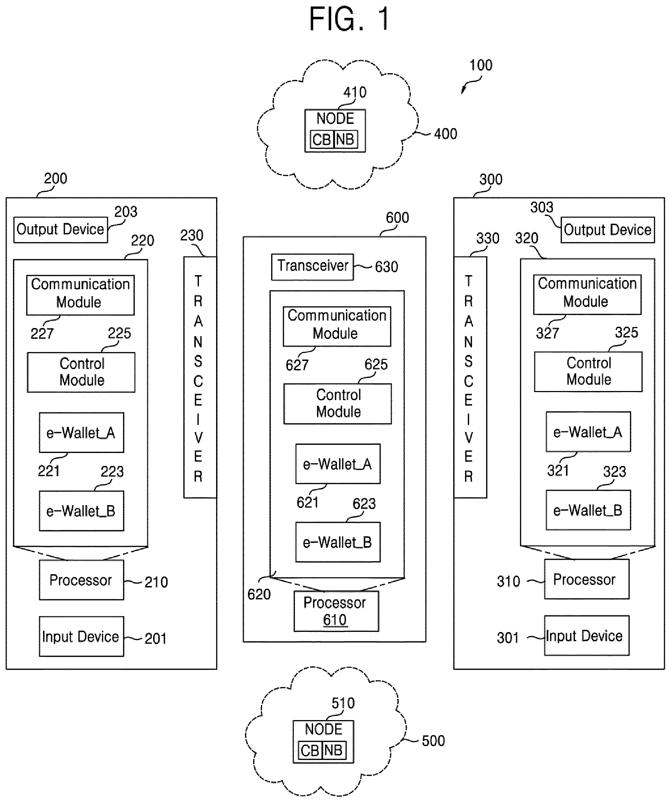

Referring to FIGS. 1 to 10, a digital signature is always made by the subject of remittance (e.g., a sender), and information digitally signed by the sender may be published by any one of the sender, a relay server 600, and a receiver.

In the present disclosure, that one electronic wallet exchanges information with another electronic wallet means that a first computing device (or a first transceiver) executing the one electronic wallet exchanges the information with a second computing device (or a second transceiver) executing the other electronic wallet through a communication network. Here, the communication network includes a communication network between the first computing device 200 and the relay server 600, a communication network between the second computing device 300 and the relay server 600, and a communication network between the computing device 200 or 300 and the blockchain network 400 or 500.

FIG. 1 is a block diagram of a blockchain system according to an embodiment of the present disclosure.

Referring to FIG. 1, a blockchain system (referred to as a blockchain remittance system or a distributed ledger processing system) 100 includes a first computing device 200, a second computing device 300, a first blockchain network 400, a second blockchain network 500, and a relay server 600. The blockchain networks 400 and 500 may refer to peer-to-peer (P2P) networks or different or heterogeneous blockchain networks.

Each of the blockchain networks 400 and 500 includes a publishing device or a storage device or space, which receives and stores information published by an electronic wallet. According to embodiments, each of the blockchain networks 400 and 500 may use a method, in which a block is generated, or a method, in which a block is not generated. Although the blockchain network 400 or 500 including at least one blockchain node 410 or 510 is illustrated and described in the present disclosure, the technical ideas described in the present disclosure is not limited to generation or non-generation of a block.

Conventionally, for example, when one of two users is in (or uses) the first blockchain network 400 (e.g., a bitcoin network) and the other is in (or uses) the second blockchain network 500 (e.g., an Ethereum network), the two users cannot securely exchange their tokens with each other because the two users are not in (or do not use) the same blockchain network.

However, when the electronic wallets 220 and 320 are respectively installed in the computing devices 200 and 300 and the third electronic wallet 620 is installed in the relay server 600 electrically connected to the computing devices 200 and 300, users may securely exchange their tokens with each other by using the electronic wallets 220, 320, and/or 620.

The processors 210, 310, and 610 of the respective computing devices 200, 300, and 600 respectively execute the electronic wallets 220, 320, and 620, each of which is stored in a storage medium. It is assumed that the structure and function of the electronic wallet 220 are the same as those of the electronic wallet 320.

The first electronic wallet 220 includes a first e-wallet_A 221, a first e-wallet_B 223, a first control module (or a first controller) 225, and a first communication module (or a first software transceiver) 227. Each of the elements (221, 223, 225, and 227) refers to a functional combination of software that may perform functions or operations described below.

The first e-wallet_A 221 performs remittance and receipt of tokens by using the first blockchain network 400 and/or the relay server 600. The first e-wallet_B 223 performs remittance and receipt of tokens by using the second blockchain network 500 and/or the relay server 600. The first control module 225 controls the first e-wallet_A 221, the first e-wallet_B 223, and the first communication module 227. The first communication module 227 communicates with the first blockchain network 400, the second blockchain network 500, and/or the relay server 600 through the first transceiver 230. The first e-wallet_A 221 and the first e-wallet_B 223 may exchange signals or information through the first control module 225.

The second electronic wallet 320 includes a second e-wallet_A 321, a second e-wallet_B 323, a second control module (or a second controller) 325, and a second communication module (or a second software transceiver) 327. Each of the elements (321, 323, 325, and 327) refers to a functional combination of software that may perform functions or operations described below.

The second e-wallet_A 321 performs remittance and receipt of tokens by using the first blockchain network 400 and/or the relay server 600. The second e-wallet_B 323 performs remittance and receipt of tokens by using the second blockchain network 500 and/or the relay server 600. The second control module 325 controls the second e-wallet_A 321, the second e-wallet_B 323, and the second communication module 327. The second communication module 327 communicates with the first blockchain network 400, the second blockchain network 500, and/or the relay server 600 through the second transceiver 330. The second e-wallet_A 321 and the second e-wallet_B 323 may exchange signals or information through the second control module 325.

The third electronic wallet 620 executed by the relay server 600 includes a third e-wallet_A 621, a third e-wallet_B 623, a third control module (or a third controller) 625, and a third communication module (or a third software transceiver) 627. Each of the elements (621, 623, 625, and 627) refers to a functional combination of software that may perform functions or operations described below.

The operations of the elements (621, 623, 625, and 627) are described with reference to FIGS. 4 to 10. It is assumed that the function and structure of the first e-wallet_A 221 are the same as those of the second e-wallet_A 321 and the function and structure of the first e-wallet_B 223 are the same as those of the second e-wallet_B 323.

For example, each e-wallet_A 221, 321, or 621 may perform all of the function of the first e-wallet_A 221, the function of the second e-wallet_A 321, and/or the function of the third e-wallet_A 621. Each e-wallet_B 223, 323, or 623 may perform all of the function of the first e-wallet_B 223, the function of the second e-wallet_B 323, and/or the function of the third e-wallet_B 623.

The first blockchain network 400 includes at least one blockchain node 410. The blockchain node 410 generates and manages blocks CB and NB. The second blockchain network 500 includes at least one blockchain node 510. The blockchain node 510 generates and manages blocks CB and NB.

Although it is illustrated in FIGS. 1 and 4 to 10 that each of the blockchain networks 400 and 500 includes one blockchain node 410 or 510, this is just for convenience of description. Each of the blockchain nodes 410 and 510 collectively refers to one or more blockchain nodes.

The first blockchain network 400 is a technical infrastructure that provides a blockchain ledger and smart contract (or chaincode) services to applications (e.g., 221, 321, and/or 621). The first blockchain network 400 may process a blockchain ledger or a distributed ledger.

The second blockchain network 500 is a technical infrastructure that provides a blockchain ledger and smart contract (or chaincode) services to applications (e.g., 223, 323, and/or 623). The second blockchain network 500 may process a blockchain ledger or a distributed ledger.

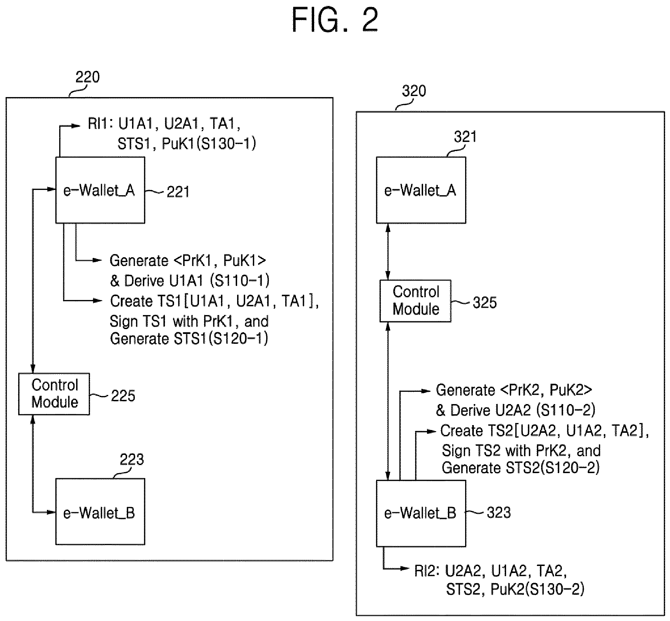

FIG. 2 is a diagram for describing embodiments of the operations of electronic wallets included in the blockchain system of FIG. 1.

For convenience of description, it is assumed in FIG. 2 that the first user of the first computing device 200 sends a first token (or referred to as a first token amount) TA1 to the second user of the second computing device 300 and the second user sends a second token (or referred to as a second token amount) TA2 to the first user. Accordingly, the first and second users may securely exchange the tokens TA1 and TA2, which are respectively used in heterogeneous blockchain networks (or systems) 400 and 500, through the relay server 600 simultaneously, in parallel, or with an allowable time difference. In other words, the relay server 600 functions to guarantee the exchange of the tokens TA1 and TA2, which are described below with reference to FIGS. 4 to 10.

The first token (or referred to as a first blockchain token) TA1 refers to a token that is used (or defined) in the first blockchain network 400, and the second token (or referred to as a second blockchain token) TA2 refers to a token that is used (or defined) in the second blockchain network 500. Accordingly, the first token TA1 of the first user may be securely exchanged with the second token TA2 of the second user at a certain ratio (or an exchange ratio that is agreed in advance between the first and second users) through the operations described below with reference to FIGS. 4 to 10.

The first user is a sender of the first token TA1 and a receiver of the second token TA2 exchanged for the first token TA1. The second user is a sender of the second token TA2 and a receiver of the first token TA1 exchanged for the second token TA2.

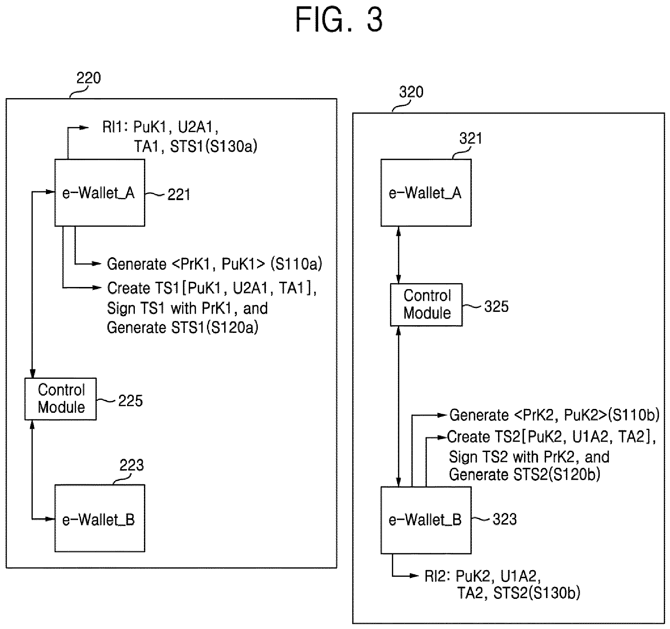

According to embodiments of FIGS. 2 and 3, the first e-wallet_A 221 is a first token remittance electronic wallet, the second e-wallet_A 321 is a first token receipt electronic wallet, the second e-wallet_B 323 is a second token remittance electronic wallet, and the first e-wallet_B 223 is a second token receipt electronic wallet.

The first token remittance electronic wallet 221 included in the first electronic wallet 220 of the first user generates a pair <PrK1, PuK1> of a first private key PrK1 and a first public key PuK1 and generates (or derives) a first user's first address U1A1 from the first public key PuK1 (or by applying a hash function to the first public key PuK1) in operation S110-1.

When the first user inputs a second user's first address U2A1 and the first token (or referred to as the first token amount) TA1 corresponding to a remittance amount into the first token remittance electronic wallet 221 by using the first input device 201 of the first computing device 200, the first token remittance electronic wallet 221 creates a first transaction TS1[U1A1, U2A1, TA1], which includes the first user's first address U1A1 (where the first user is the sender of the first token TA1), the second user's first address U2A1 (where the second user is the receiver of the first token TA1), and the first token TA1, and generates a digitally signed first transaction STS1 by digitally signing the first transaction TS1 with the first private key PrK1 in operation S120-1.

The second token remittance electronic wallet 323 included in the second electronic wallet 320 of the second user generates a pair <PrK2, PuK2> of a second private key PrK2 and a second public key PuK2 and generates (or derives) a second user's second address U2A2 from the second public key PuK2 (or by applying a hash function to the second public key PuK2) in operation S110-2.

When the second user inputs a first user's second address U1A2 and the second token (or the second token amount) TA2 corresponding to a remittance amount into the second token remittance electronic wallet 323 by using the second input device 301 of the second computing device 300, the second token remittance electronic wallet 323 creates a second transaction TS2[U2A2, U1A2, TA2], which includes the second user's second address U2A2 (where the second user is the sender of the second token TA2), the first user's second address U1A2 (where the first user is the receiver of the second token TA2), and the second token TA2, and generates a digitally signed second transaction STS2 by digitally signing the second transaction TS2 with the second private key PrK2 in operation S120-2.

The first token remittance electronic wallet 221 generates first token remittance information RI1 in operation S130-1. The first token remittance information RI1 includes the first user's first address U1A1, the second user's first address U2A1, the first token TA1, the digitally signed first transaction STS1, and the first public key PuK1.

The first token remittance information RI1 may be included in a blockchain ledger, which includes a plurality of blocks in a chain, and the first token TA1 may refer to the amount of blockchain-based electronic money, digital currency, cryptocurrency, or virtual currency.

The second token remittance electronic wallet 323 generates second token remittance information RI2 in operation S130-2. The second token remittance information RI2 includes the second user's second address U2A2, the first user's second address U1A2, the second token TA2, the digitally signed second transaction STS2, and the second public key PuK2.

The second token remittance information RI2 may be included in a blockchain ledger, which includes a plurality of blocks in a chain, and the second token TA2 may refer to the amount of blockchain-based electronic money, digital currency, cryptocurrency, or virtual currency.

FIG. 3 is a diagram for describing embodiments of the operations of electronic wallets included in the blockchain system of FIG. 1. For convenience of description, it is assumed in FIG. 3 that the first user sends the first token TA1 to the second user and the second user sends the second token TA2 to the first user.

The first token remittance electronic wallet 221 included in the first electronic wallet 220 of the first user generates a pair <PrK1, PuK1> of the first private key PrK1 and the first public key PuK1 in operation S110a.

When the first user inputs the second user's first address U2A1 and the first token (or the first token amount) TA1 corresponding to a remittance amount into the first token remittance electronic wallet 221 by using the first input device 201 of the first computing device 200, the first token remittance electronic wallet 221 creates the first transaction TS1[PuK1, U2A1, TA1], which includes the first public key PuK1, the second user's first address U2A1 (where the second user is the receiver of the first token TA1), and the first token TA1, and generates the digitally signed first transaction STS1 by digitally signing the first transaction TS1 with the first private key PrK1 in operation S120a.

The second token remittance electronic wallet 323 included in the second electronic wallet 320 of the second user generates the pair <PrK2, PuK2> of the second private key PrK2 and the second public key PuK2 in operation S110b.

When the second user inputs the first user's second address U1A2 and the second token (or the second token amount) TA2 corresponding to a remittance amount into the second token remittance electronic wallet 323 by using the second input device 301 of the second computing device 300, the second token remittance electronic wallet 323 creates the second transaction TS2[PuK2, U1A2, TA2], which includes the second public key PuK2, the first user's second address U1A2 (where the first user is the receiver of the second token TA2), and the second token TA2, and generates the digitally signed second transaction STS2 by digitally signing the second transaction TS2 with the second private key PrK2 in operation S120b.

The first token remittance electronic wallet 221 generates the first token remittance information RI1 in operation S130a. The first token remittance information RI1 includes the first public key PuK1, the second user's first address U2A1, the first token TA1, and the digitally signed first transaction STS1. At this time, the first public key PuK1 is used instead of the first user's first address U1A1. According to embodiments, the second user's first address U2A1 may be a public key generated by the second e-wallet_A 321 of the second user.

The second token remittance electronic wallet 323 generates the second token remittance information RI2 in operation S130b. The second token remittance information RI2 includes the second public key PuK2, the first user's second address U1A2, the second token TA2, and the digitally signed second transaction STS2. At this time, the second public key PuK2 is used instead of the second user's second address U2A2. According to embodiments, the first user's second address U1A2 may be a public key generated by the first e-wallet_B 223 of the first user.

FIG. 4 is a diagram for describing an embodiment of a method of exchanging different blockchain tokens by using the blockchain system of FIG. 1. A method of exchanging the tokens TA1 and TA2 by using the relay server 600 is described with reference to FIGS. 1 to 4.

The first token remittance electronic wallet 221 transmits the first token remittance information RI1, which is generated in operation S130-1 in FIG. 2 or operation S130a in FIG. 3, to a first token processing electronic wallet 621 of a relay server 600 in operation S210. The first token remittance information RI1 includes sender information (U1A1 or PuK1), receiver information (U2A1), and token amount information (TA1). According to embodiments, the first token processing electronic wallet 621 may transmit, to the third control module 625, the first token remittance information RI1 or a first signal indicating that the first token remittance information RI1 has been received.

The second token remittance electronic wallet 323 transmits the second token remittance information RI2, which is generated in operation S130-2 in FIG. 2 or operation S130b in FIG. 3, to a second token processing electronic wallet 623 of the relay server 600 in operation S220. The second token remittance information RI2 includes sender information (U2A2 or PuK2), receiver information (U1A2), and token amount information (TA2). According to embodiments, the second token processing electronic wallet 623 may transmit, to the third control module 625, the second token remittance information RI2 or a second signal indicating that the second token remittance information RI2 has been received.

The third control module 625 identifies whether all of the first token remittance information RI1 and the second token remittance information RI2 (or the first and second signals) have been received in operation S230. In other words, the third control module 625 determines whether exchange agreement coincides between the first token TA1 and the second token TA2, according to a result of the identification, in operation S230.

After receiving all of the first token remittance information RI1 and the second token remittance information RI2 (or the first and second signals), the third control module 625 generates and transmits a transmission instruction signal to the first and second token processing electronic wallets 621 and 623.

In response to the transmission instruction signal, the first token processing electronic wallet 621 transmits the first token remittance information RI1 to the first token receipt electronic wallet 321 in operation S240. The first token receipt electronic wallet 321 publishes the first token remittance information RI1 on the first blockchain network 400 in operation S260. In other words, the first token receipt electronic wallet 321 of the receiver of the first token TA1 publishes, on the first blockchain network 400, a token to be received from a sender (i.e., the first token TA1 to be remitted by the first user) or the first token remittance information RI1 digitally signed with a private key of the first token remittance electronic wallet 221 in operation S260.

The blockchain node 410 of the first blockchain network 400 receives (or picks up) the first token remittance information RI1 from the first token receipt electronic wallet 321, generates a next block (or referred to as a new block) NB next to an existing block CB, and stores the first token remittance information RI1 in the next block NB.

For example, the first token receipt electronic wallet 321 or the blockchain node 410 may store the first token remittance information RI1 (or a transaction including the first token remittance information RI1) in the next block NB of the blockchain node 410.

According to embodiments, when the first token remittance information RI1 is stored in (or published on) the next block NB of the blockchain node 410, the first token remittance electronic wallet 221, which monitors the storage (or publication) of the first token remittance information RI1, may update the first user's token balance after the first token TA1 is stored (or published).

In response to the transmission instruction signal, the second token processing electronic wallet 623 transmits the second token remittance information RI2 to the second token receipt electronic wallet 223 in operation S250. The second token receipt electronic wallet 223 publishes the second token remittance information RI2 on the second blockchain network 500 in operation S270. In other words, the second token receipt electronic wallet 223 publishes, on the second blockchain network 500, a token to be received from a sender (i.e., the second token TA2 to be remitted by the second user) or the second token remittance information RI2 digitally signed with a private key of the second token remittance electronic wallet 323 in operation S270.

The blockchain node 510 of the second blockchain network 500 receives (or picks up) the second token remittance information RI2 from the second token receipt electronic wallet 223, generates a next block (or referred to as a new block) NB next to an existing block CB, and stores the second token remittance information RI2 in the next block NB.

For example, the second token receipt electronic wallet 223 or the blockchain node 510 may store the second token remittance information RI2 (or a transaction including the second token remittance information R12) in the second blockchain network 500 or the next block NB of the blockchain node 510.

According to embodiments, when the second token remittance information RI2 is stored in (or published on) the next block NB of the blockchain node 510, the second token remittance electronic wallet 323, which monitors the storage (or publication) of the second token remittance information RI2, may update the second user's token balance after the second token TA2 is stored (or published).

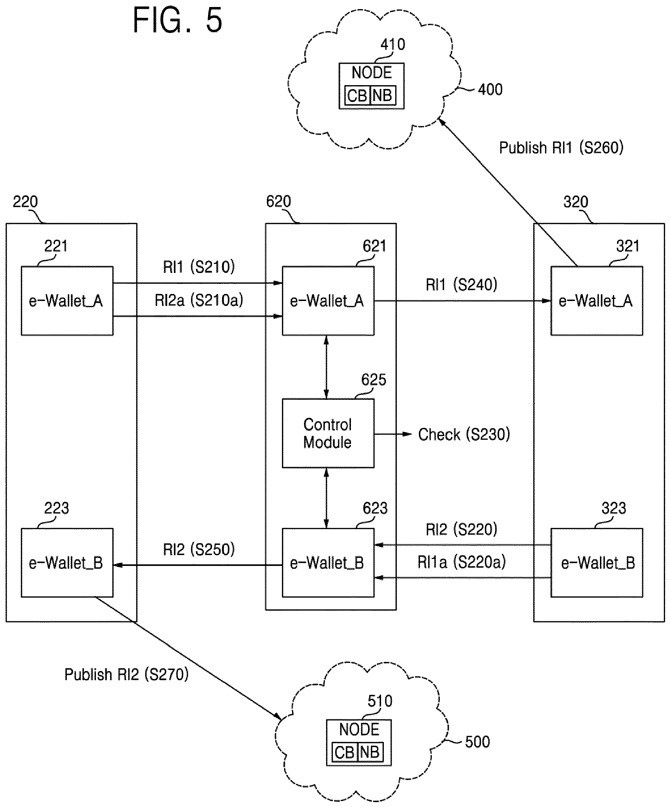

FIG. 5 is a diagram for describing an embodiment of a method of exchanging different blockchain tokens by using the blockchain system of FIG. 1. A method of exchanging the tokens TA1 and TA2 by using the relay server 600 is described below with reference to FIGS. 1 to 5.

The first token remittance electronic wallet 221 transmits the first token remittance information RI1, which is generated in operation S130-1 in FIG. 2 or operation S130a in FIG. 3, to the first token processing electronic wallet 621 of the third electronic wallet 620 in operation S210. In addition, the first token remittance electronic wallet 221 transmits, to the first token processing electronic wallet 621, first receipt information RI2a, which includes token amount information (TA2, referred to as fourth token amount information) to be received by the first user from the second user, in operation S210a.

The first token remittance information RI1 includes sender information (U1A1 or PuK1), receiver information (U2A1), and token amount information (TA1). The first receipt information RI2a includes sender information, receiver information, and the token amount information (TA2). According to embodiments, the first token processing electronic wallet 621 may transmit, to the third control module 625, the first token remittance information RI1 and the first receipt information RI2a.

The second token remittance electronic wallet 323 transmits the second token remittance information RI2, which is generated in operation S130-2 in FIG. 2 or operation S130b in FIG. 3, to the second token processing electronic wallet 623 of the third electronic wallet 620 in operation S220. In addition, the second token remittance electronic wallet 323 transmits, to the second token processing electronic wallet 623, second receipt information RI1a, which includes token amount information (TA1, referred to as third token amount information) to be received by the second user from the first user, in operation S220a.

The second token remittance information RI2 includes sender information (U2A2 or PuK2), receiver information (U1A2), and token amount information (TA2). The second receipt information RI1a includes sender information, receiver information, and the token amount information (TA1).

The sender information, the receiver information, and the token amount information included in the first token remittance information RI1 need to coincide with those included in the second receipt information RI1a. The sender information, the receiver information, and the token amount information included in the second token remittance information RI2 need to coincide with those included in the first receipt information RI2a. According to embodiments, the second token processing electronic wallet 623 may transmit, to the third control module 625, the second token remittance information RI2 and the second receipt information RI1a.

The third control module 625 identifies whether all of the first token remittance information RI1, the first receipt information RI2a, the second token remittance information RI2, and the second receipt information RI1a have been received in operation S230.

For example, when the sender information, the receiver information, and the token amount information included in the first token remittance information RI1 coincide with those included in the second receipt information RI1a and the sender information, the receiver information, and the token amount information included in the second token remittance information RI2 coincide with those included in the first receipt information RI2a, the third control module 625 may determine that exchange agreement coincides between the first token TA1 and the second token TA2 in operation S230.

According to an embodiment, when a token amount included in the first token remittance information RI1 is the same as that included in the second receipt information RI1a and a token amount included in the second token remittance information RI2 is the same as that included in the first receipt information RI2a, the third control module 625 may determine that exchange agreement coincides between the first token TA1 and the second token TA2 in operation S230.

For example, the third control module 625 determines whether pieces of token amount information (TA1 and/or TA2) to be exchanged between the first user and the second user coincide with each other by using the first token remittance information RI1, the first receipt information RI2a, the second token remittance information RI2, and the second receipt information RI1a.

When it is determined that the token amount information (TA1) to be remitted by the first user to the second user coincides with the token amount information (TA2) to be received by the first user from the second user, the third control module 625 generates and transmits a transmission instruction signal to the first and second token processing electronic wallets 621 and 623.

In response to the transmission instruction signal, the first token processing electronic wallet 621 transmits the first token remittance information RI1 to the first token receipt electronic wallet 321 in operation S240. The first token receipt electronic wallet 321 publishes the first token remittance information RI1 on the first blockchain network 400 in operation S260. In other words, the first token receipt electronic wallet 321 of the receiver of the first token TA1 publishes, on the first blockchain network 400, a token to be received from a sender (i.e., the first token TA1 remitted by the first user) or a digitally signed token (or digitally signed first token remittance information), which is obtained by digitally signing the first token remittance information RI1 with a private key of the first token remittance electronic wallet 221, in operation S260.

The blockchain node 410 of the first blockchain network 400 receives (or picks up) the first token remittance information RI1 from the first token receipt electronic wallet 321, generates a next block (or referred to as a new block) NB next to an existing block CB, and stores the first token remittance information RI1 in the next block NB.

For example, the first token receipt electronic wallet 321 or the blockchain node 410 may generate and store the first token remittance information RI1 (or a transaction including the first token remittance information RI1) in the next block NB of the blockchain node 410.

According to embodiments, when the first token remittance information RI1 is stored in (or published on) the next block NB of the blockchain node 410, the first token remittance electronic wallet 221, which monitors the storage (or publication) of the first token remittance information RI1, may update the first user's token balance after the first token TA1 is stored (or published).

In response to the transmission instruction signal, the second token processing electronic wallet 623 transmits the second token remittance information RI2 to the second token receipt electronic wallet 223 in operation S250. The second token receipt electronic wallet 223 publishes the second token remittance information RI2 on the second blockchain network 500 in operation S270. In other words, the second token receipt electronic wallet 223 publishes, on the second blockchain network 500, a token to be received from a sender (i.e., the second token TA2 remitted by the second user) or a digitally signed token (or digitally signed second token remittance information), which is obtained by digitally signing the second token remittance information RI2 with a private key of the second token remittance electronic wallet 323, in operation S270.

The blockchain node 510 of the second blockchain network 500 receives (or picks up) the second token remittance information RI2 from the second token receipt electronic wallet 223, generates a next block (or referred to as a new block) NB next to an existing block CB, and stores the second token remittance information RI2 in the next block NB.

For example, the second token receipt electronic wallet 223 or the blockchain node 510 may generate and store the second token remittance information RI2 (or a transaction including the second token remittance information RI2) in the second blockchain network 500 or the next block NB of the blockchain node 510.

According to embodiments, when the second token remittance information RI2 is stored in (or published on) the next block NB of the blockchain node 510, the second token remittance electronic wallet 323, which monitors the storage (or publication) of the second token remittance information RI2, may update the second user's token balance after the second token TA2 is stored (or published).

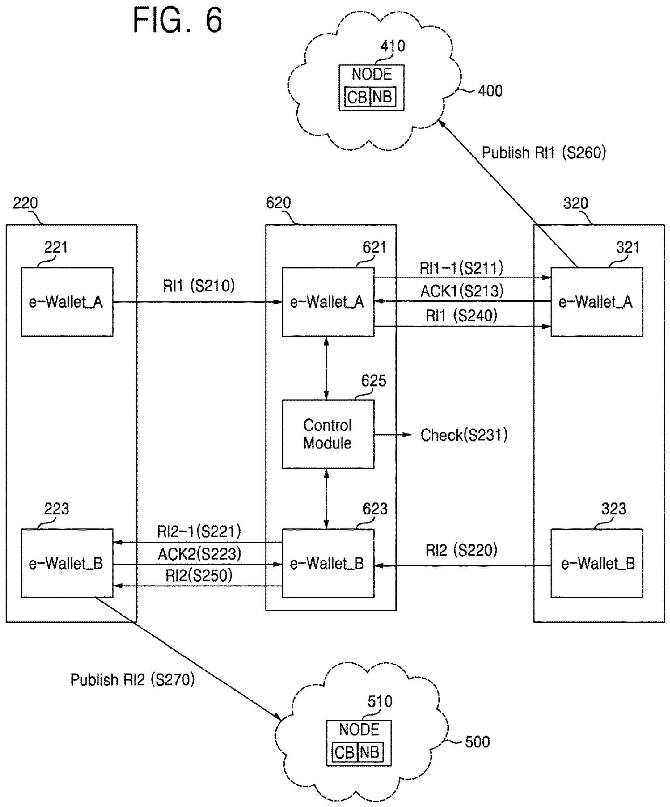

FIG. 6 is a diagram for describing still another embodiment of a method of exchanging different blockchain tokens by using the blockchain system of FIG. 1. The third electronic wallet 620 further performs operations S211 and S213 of allowing the second user to verify the first token TA1 and operations S221 and S223 of allowing the first user to verify the second token TA2.

As shown in FIGS. 6, 8, and 10, information (RI1-1, RI2-1, MSGa, or MSGb), which is transmitted from the relay server 600 to an electronic wallet (321 or 223), may include sender information, receiver information, and remittance amount, and the relay server 600 may digitally sign the information (RI1-1, RI2-1, MSGa, or MSGb) with the key thereof (e.g., a private key allocated in each blockchain network (400 or 500) and transmit digitally signed information to the electronic wallet (321 or 223). At this time the electronic wallet (321 or 223) may decode or decipher the digitally signed information with the public key of the relay server 600 and check whether the content of the information (RI1-1, RI2-1, MSGa, or MSGb) is correct.

Accordingly, information that has not been digitally signed and information that has been digitally signed are collectively referred to as the information (RI1-1, RI2-1, MSGa, or MSGb) shown in FIGS. 6, 8, and 10.

The first token processing electronic wallet 621 generates first token verification information RI1-1, based on the first token remittance information RI1 received in operation S210, and transmits the first token verification information RI1-1 to the first token receipt electronic wallet 321 in operation S211. The first token verification information RI1-1 includes first token sender information (U1A1 or PuK1), first token receiver information (U2A1), and the first token TA1, which are extracted from the first token remittance information RI1.

Because the second user (corresponding to U2A1) already knows the first token TA1 that has been agreed between the second user and the first user (corresponding to U1A1), when the second user verifies the first token verification information RI1-1 through the first token receipt electronic wallet 321, the first token receipt electronic wallet 321 generates a first acknowledgement signal ACK1, based on the verification (or a verification signal) input (or processed) by the second user, and transmits the first acknowledgement signal ACK1 to the first token processing electronic wallet 621 in operation S213. The first token processing electronic wallet 621 transmits the first acknowledgement signal ACK1 to the third control module 625.

The second token processing electronic wallet 623 generates second token verification information RI2-1, based on the second token remittance information RI2 received in operation S220, and transmits the second token verification information R12-1 to the second token receipt electronic wallet 223 in operation S221. The second token verification information RI2-1 includes second token sender information (U2A2 or PuK2), second token receiver information (U1A2), and the second token TA2, which are extracted from the second token remittance information RI2.

Because the first user (corresponding to U1A2) already knows the second token TA2 that has been agreed between the first user and the second user (corresponding to U2A2), when the first user verifies the second token verification information RI2-1 through the second token receipt electronic wallet 223, the second token receipt electronic wallet 223 generates a second acknowledgement signal ACK2, based on the verification (or a verification signal) input (or processed) by the first user, and transmits the second acknowledgement signal ACK2 to the second token processing electronic wallet 623 in operation S223. The second token processing electronic wallet 623 transmits the second acknowledgement signal ACK2 to the third control module 625.

The third control module 625 checks whether all of the first acknowledgement signal ACK1 and the second acknowledgement signal ACK2 have been received in operation S231. For example, the third control module 625 determines the reception of all acknowledgement signals (ACK1 and ACK2) to be a coincidence of exchange agreement (or determines a coincidence of exchange agreement based on the fact that all acknowledgement signals (ACK1 and ACK2) have been received).

After all of the first and second acknowledgement signals ACK1 and ACK2 are received (i.e., when there is no problem in exchanging the tokens TA1 and TA2), the third control module 625 generates and transmits a transmission instruction signal to the processing electronic wallets 621 and 623.

In response to the transmission instruction signal, the first token processing electronic wallet 621 transmits the first token remittance information RI1 to the first token receipt electronic wallet 321 in operation S240. In response to the transmission instruction signal, the second token processing electronic wallet 623 transmits the second token remittance information RI2 to the second token receipt electronic wallet 223 in operation S250.

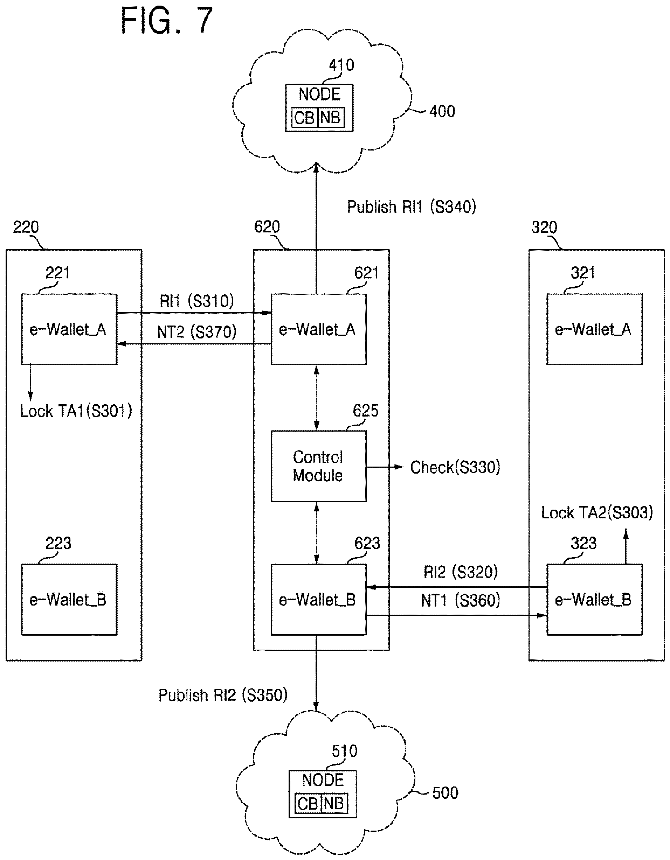

FIG. 7 is a diagram for describing even another embodiment of a method of exchanging different blockchain tokens by using the blockchain system of FIG. 1. A method of exchanging tokens (TA1 and TA2) by using the relay server 600 is described below with reference to FIGS. 1, 2, 3, and 7.

To guarantee payment of a token, each electronic wallet (220 or 320) may perform a lock function according to a user's setting. The lock function securely guarantee the exchange of tokens (TA1 and TA2) used for remittance to the other party.

For example, when the first user's token balance is 100 and the first token TA1 is 50 and the lock function is applied to the first user, the first user may not use more than 50 from the token balance during the exchange (or atomic exchange) between the first token TA1 of the first user and the second token TA2 of the second user.

Accordingly, when the lock function is set by a sender, a receiver may securely receive the locked token before the lock function is cancelled (or released). For example, the lock function may not be cancelled by either a sender or a receiver of a token but be cancelled by mutual agreement. For example, when the first token TA1 is 50, a token transaction (or exchange) fee is included in 50.

The first token remittance electronic wallet 221 performs the lock function on the first token TA1 in operation S301, and the second token remittance electronic wallet 323 performs the lock function on the second token TA2 in operation S303. The first token remittance electronic wallet 221 illustrated in FIGS. 4 to 10 may perform the lock function on the first token TA1, and the second token remittance electronic wallet 323 illustrated in FIGS. 4 to 10 may perform the lock function on the second token TA2.

The first token remittance electronic wallet 221 transmits the first token remittance information RI1, which is generated in operation S130-1 in FIG. 2 or operation S130a in FIG. 3, to the first token processing electronic wallet 621 of the third electronic wallet 620 in operation S310. According to embodiments, the first token processing electronic wallet 621 may transmit, to the third control module 625, the first token remittance information RI1 and the first signal indicating that the first token remittance information RI1 has been received.

The second token remittance electronic wallet 323 transmits the second token remittance information RI2, which is generated in operation S130-2 in FIG. 2 or operation S130b in FIG. 3, to the second token processing electronic wallet 623 of the third electronic wallet 620 in operation S320. According to embodiments, the second token processing electronic wallet 623 may transmit, to the third control module 625, the second token remittance information RI2 and the second signal indicating that the second token remittance information RI2 has been received.

The third control module 625 checks whether all of the first token remittance information RI1 and the second token remittance information RI2 (or the first and second signals) have been received in operation S330.

After receiving all of the first token remittance information RI1 and the second token remittance information RI2 (or after receiving all of the first and second signals), the third control module 625 generates and transmits a publish instruction signal to the first and second token processing electronic wallets 621 and 623.

In response to the publish instruction signal from the third control module 625, the first token processing electronic wallet 621 publishes the first token remittance information RI1 on the first blockchain network 400 in operation S340. Because the first token remittance information RI1 is information digitally signed by the first token remittance electronic wallet 221 and the third electronic wallet 620 or the third e-wallet_A 621 publishes the digitally signed information RI1 on behalf of the electronic wallet 221 or 321, the electronic wallet 221, 321, and/or 621 may publish the digitally signed information RI1.

When the first token processing electronic wallet 621 publishes the first token remittance information RI1 on the first blockchain network 400, the first token processing electronic wallet 621 generates first publish notification information NT1 indicating that the first token remittance information RI1 has been published. The first publish notification information NT1 is transmitted to the second token processing electronic wallet 623 through the third control module 625, and the second token processing electronic wallet 623 transmits the first publish notification information NT1 to the second token remittance electronic wallet 323 in operation S360. In the case where the first token receipt electronic wallet 321 may monitor the first token remittance information RI1 published on the first blockchain network 400, the generation and transmission of the first publish notification information NT1 is skipped.

The blockchain node 410 of the first blockchain network 400 receives (or picks up) the first token remittance information RI1 published by the first token processing electronic wallet 621, generates a next block NB next to an existing block CB, and stores the first token remittance information RI1 in the next block NB.

According to embodiments, when the first token remittance information RI1 is stored in (or published on) the next block NB of the blockchain node 410, the first token remittance electronic wallet 221, which monitors the storage (or publication) of the first token remittance information RI1 in (or on) the first blockchain network 400, may update the first user's token balance after the first token TA1 is stored (or published).

According to embodiments, when the first token remittance information RI1 is stored in (or published on) the next block NB of the blockchain node 410, the first token receipt electronic wallet 321, which monitors the storage (or publication) of the first token remittance information RI1, may read the first token remittance information RI1 from the next block NB of the blockchain node 410.

In response to the publish instruction signal from the third control module 625, the second token processing electronic wallet 623 publishes the second token remittance information RI2 on the second blockchain network 500 in operation S350. Because the second token remittance information RI2 is information digitally signed by the second token remittance electronic wallet 323 and the third electronic wallet 620 or the third e-wallet_B 623 publishes the digitally signed information RI2 on behalf (instead) of the electronic wallet 223 or 323, the electronic wallet 223, 323, and/or 623 may publish the digitally signed information RI2.

When the second token processing electronic wallet 623 publishes the second token remittance information RI2 on the second blockchain network 500, the second token processing electronic wallet 623 generates second publish notification information NT2 indicating that the second token remittance information RI2 has been published. The second publish notification information NT2 is transmitted to the first token processing electronic wallet 621 through the third control module 625, and the first token processing electronic wallet 621 transmits the second publish notification information NT2 to the first token remittance electronic wallet 221 in operation S370. In the case where the second token receipt electronic wallet 223 may monitor the second token remittance information RI2 published on the second blockchain network 500, the generation and transmission of the second publish notification information NT2 is skipped.

The blockchain node 510 of the second blockchain network 500 receives (or picks up) the second token remittance information RI2 stored (or published) by the second token processing electronic wallet 623, generates a next block NB next to an existing block CB, and stores the second token remittance information RI2 in the next block NB.

According to embodiments, when the second token remittance information RI2 is stored in (or published on) the next block NB of the blockchain node 510, the second token remittance electronic wallet 323, which monitors the storage (or publication) of the second token remittance information RI2 in (or on) the second blockchain network 500, may update the second user's token balance after the second token TA2 is stored (or published).

According to embodiments, when the second token remittance information RI2 is stored in (or published on) the next block NB of the blockchain node 510, the second token receipt electronic wallet 223, which monitors the storage (or publication) of the second token remittance information RI2, may read the second token remittance information RI2 from the next block NB of the blockchain node 510.

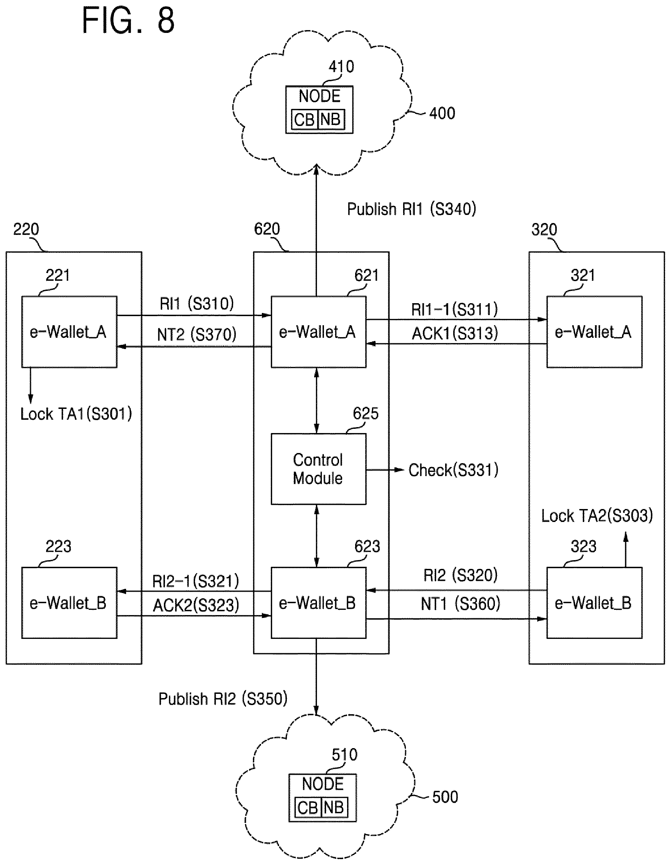

FIG. 8 is a diagram for describing yet another embodiment of a method of exchanging different blockchain tokens by using the blockchain system of FIG. 1. Referring to FIGS. 7 and 8, the third electronic wallet 620 further performs operations S311 and S313 of allowing the second user to verify the first token TA1 in advance and operations S321 and S323 of allowing the first user to verify the second token TA2 in advance.

The first token processing electronic wallet 621 generates the first token verification information RI1-1 based on the first token remittance information RI1 received in operation S310, and transmits the first token verification information RI1-1 to the first token receipt electronic wallet 321 in operation S311. The first token verification information RI1-1 includes first token sender information (U1A1), first token receiver information (U2A1), and the first token TA1, which are extracted from the first token remittance information RI1.

Because the second user already knows the first token TA1 that has been agreed between the second user and the first user, when the second user verifies the first token verification information RI1-1 through the first token receipt electronic wallet 321, the first token receipt electronic wallet 321 generates the first acknowledgement signal ACK1 based on the verification (or a verification signal) input (or processed) by the second user, and transmits the first acknowledgement signal ACK1 to the first token processing electronic wallet 621 in operation S313. The first token processing electronic wallet 621 transmits the first acknowledgement signal ACK1 to the third control module 625.

The second token processing electronic wallet 623 generates the second token verification information RI2-1, based on the second token remittance information RI2 received in operation S320, and transmits the second token verification information RI2-1 to the second token receipt electronic wallet 223 in operation S321. The second token verification information R12-1 includes second token sender information (U2A2), second token receiver information (U1A2), and the second token TA2, which are extracted from the second token remittance information RI2.

Because the first user already knows the second token TA2 that has been agreed between the first user and the second user, when the first user verifies the second token verification information RI2-1 through the second token receipt electronic wallet 223, the second token receipt electronic wallet 223 generates the second acknowledgement signal ACK2, based on the verification (or a verification signal) input (or processed) by the first user, and transmits the second acknowledgement signal ACK2 to the second token processing electronic wallet 623 in operation S323. The second token processing electronic wallet 623 transmits the second acknowledgement signal ACK2 to the third control module 625.

The third control module 625, which identifies the exchange agreement between the first user and the second user, checks whether all of the first acknowledgement signal ACK1 and the second acknowledgement signal ACK2 have been received in operation S331.

After all of the first and second acknowledgement signals ACK1 and ACK2 are received (i.e., when there is no problem in exchanging the tokens TA1 and TA2), the third control module 625 generates and transmits a publish instruction signal to the first and second token processing electronic wallets 621 and 623.

In response to the publish instruction signal from the third control module 625, the first token processing electronic wallet 621 publishes the first token remittance information RI1 on the first blockchain network 400 in operation S340.

In response to the publish instruction signal from the third control module 625, the second token processing electronic wallet 623 publishes the second token remittance information RI2 on the second blockchain network 500 in operation S350. As described above, the generation and transmission of the first publish notification information NT1 and the generation and transmission of the second publish notification information NT2 may be skipped.

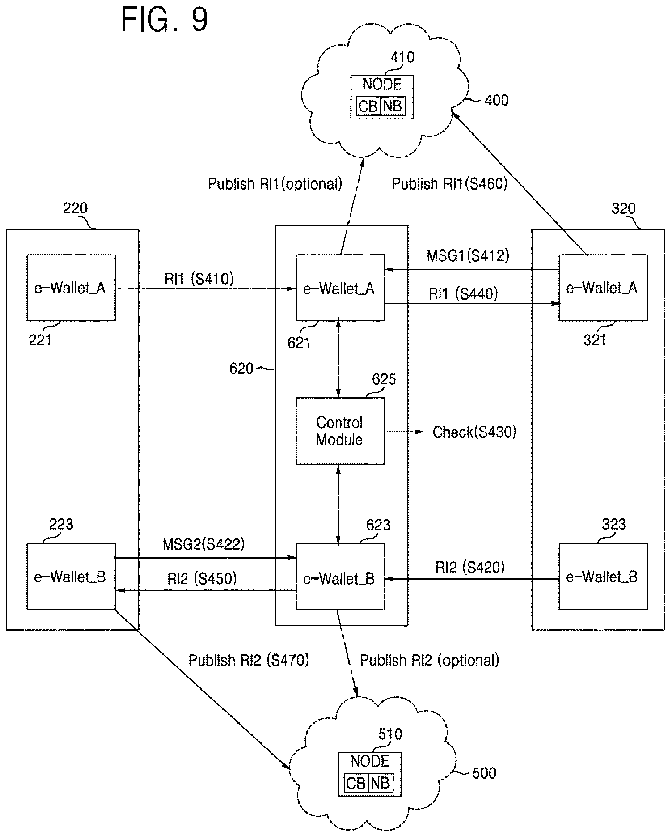

FIG. 9 is a diagram for describing a further embodiment of a method of exchanging different blockchain tokens by using the blockchain system 100 of FIG. 1. A method of exchanging tokens (TA1 and TA2) by using the relay server 600 is described below with reference to FIGS. 1, 2, 3, and 9.

The first token remittance electronic wallet 221 transmits the first token remittance information RI1, which is generated in operation S130-1 in FIG. 2 or operation S130a in FIG. 3, to the first token processing electronic wallet 621 of the third electronic wallet 620 in operation S410. The second token remittance electronic wallet 323 transmits the second token remittance information RI2, which is generated in operation S130-2 in FIG. 2 or operation S130b in FIG. 3, to the second token processing electronic wallet 623 of the third electronic wallet 620 in operation S420.

Because the second user already knows the first token TA1 that has been agreed between the second user and the first user, when the second user inputs the first token TA1 into the first token receipt electronic wallet 321, the first token receipt electronic wallet 321 generates and transmits a first message MSG1 including information about the first token TA1 to the first token processing electronic wallet 621 in operation S412, and the first token processing electronic wallet 621 transmits the first message MSG1 to the third control module 625.

Because the first user already knows the second token TA2 that has been agreed between the first user and the second user, when the first user inputs the second token TA2 into the second token receipt electronic wallet 223, the second token receipt electronic wallet 223 generates and transmits a second message MSG2 including information about the second token TA2 to the second token processing electronic wallet 623 in operation S422, and the second token processing electronic wallet 623 transmits the second message MSG2 to the third control module 625.

The third control module 625 checks whether all of the first and second messages MSG1 and MSG2 have been received in operation S430.

After all of the first and second messages MSG1 and MSG2 are received (i.e., when there is no problem in exchanging the tokens TA1 and TA2), the third control module 625 generates and transmits a transmission instruction signal to the first and second token processing electronic wallets 621 and 623.

According to embodiments, the first token processing electronic wallet 621 receives the first token remittance information RI1 from the first token remittance electronic wallet 221 in operation S410, receives the first message MSG1 regarding the first token TA1 from the first token receipt electronic wallet 321 in operation S412, determines whether the first token TA1 included in the first token remittance information RI1 coincides with the first token TA1 included in the first message MSG1, transmits a first signal indicating the coincidence therebetween to the third control module 625, and transmits the first token remittance information RI1 to the first token receipt electronic wallet 321 in response to the transmission instruction signal in operation S440.

The second token processing electronic wallet 623 receives the second token remittance information RI2 from the second token remittance electronic wallet 323 in operation S420, receives the second message MSG2 regarding the second token TA2 from the second token receipt electronic wallet 223 in operation S422, determines whether the second token TA2 included in the second token remittance information RI2 coincides with the second token TA2 included in the second message MSG2, transmits a second signal indicating the coincidence therebetween to the third control module 625, and transmits the second token remittance information RI2 to the second token receipt electronic wallet 223 in response to the transmission instruction signal in operation S450.

At this time, in response to the first and second signals respectively from the first token processing electronic wallet 621 and the second token processing electronic wallet 623, the third control module 625 generates and transmits the transmission instruction signal for operations S440 and S450 to the first and second token processing electronic wallets 621 and 623.

According to embodiments, the first token processing electronic wallet 621 receives and transmits the first token remittance information RI1 to the third control module 625, receives and transmits the first message MSG1 regarding the first token TA1 to the third control module 625, and transmits the first token remittance information RI1 to the first token receipt electronic wallet 321 in response to the transmission instruction signal.

The second token processing electronic wallet 623 receives and transmits the second token remittance information RI2 to the third control module 625, receives and transmits the second message MSG2 regarding the second token TA2 to the third control module 625, and transmits the second token remittance information RI2 to the second token receipt electronic wallet 223 in response to the transmission instruction signal.

At this time, the third control module 625 identifies whether the first token TA1 included in the first token remittance information RI1 coincides with the first token TA1 included in the first message MSG1 and the second token TA2 included in the second token remittance information RI2 coincides with the second token TA2 included in the second message MSG and, when the coincidences therebetween are identified, generates and transmits the transmission instruction signal for operations S440 and S450 to the first and second token processing electronic wallets 621 and 623.

The first token processing electronic wallet 621 transmits the first token remittance information RI1 to the first token receipt electronic wallet 321 in response to the transmission instruction signal in operation S440, and the first token receipt electronic wallet 321 publishes the first token remittance information RI1 on the first blockchain network 400 in operation S460.

The second token processing electronic wallet 623 transmits the second token remittance information RI2 to the second token receipt electronic wallet 223 in response to the transmission instruction signal in operation S450, and the second token receipt electronic wallet 223 publishes the second token remittance information RI2 on the second blockchain network 500 in operation S470.

According to embodiments, the first token processing electronic wallet 621 may transmit the first token remittance information RI1 to the first token receipt electronic wallet 321 in operation S440 and directly publish the first token remittance information RI1 on the first blockchain network 400. The second token processing electronic wallet 623 may transmit the second token remittance information RI2 to the second token receipt electronic wallet 223 in operation S450 and directly publish the second token remittance information RI2 on the second blockchain network 500.

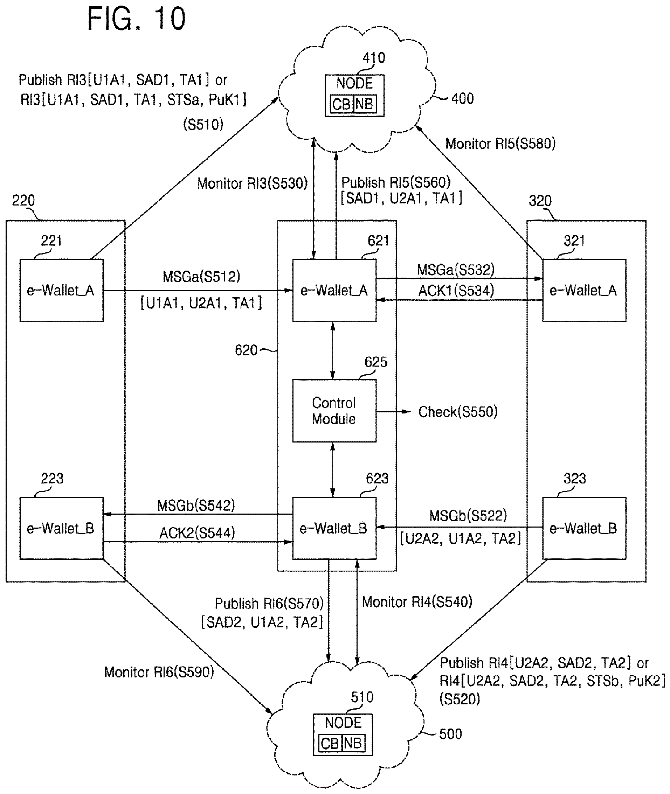

FIG. 10 is a diagram for describing a still further embodiment of a method of exchanging different blockchain tokens by using the blockchain system of FIG. 1. A method of exchanging the first and second tokens TA1 and TA2, which have already been agreed between the first and second users, by using the relay server 600 is described below with reference to FIGS. 1 and 10.

When the first user inputs first token sender information (U1A1), first token receiver information (U2A1), and the first token TA1 into the first token remittance electronic wallet 221, the first token remittance electronic wallet 221 generates first remittance information RI3 including first identification information SAD1 of the relay server 600, which is already known to the first token remittance electronic wallet 221, digitally signs the first remittance information RI3 with the private key thereof, publishes digitally signed first remittance information on the first blockchain network 400 in operation S510, and generates and transmits a first message MSGa to the first token processing electronic wallet 621 in operation S512.

The first remittance information RI3 includes the first token sender information (U1A1), the first identification information SAD1 of the relay server 600, and the first token TA1. The first message MSGa includes the first token sender information (U1A1), the first token receiver information (U2A1), and the first token TA1. For example, the first identification information SAD1 is unique information for allowing the relay server 600 to be identified in the first blockchain network 400.

According to embodiments, the first token remittance electronic wallet 221 may create a first transaction, which includes the first token sender information (U1A1), the first identification information SAD1 of the relay server 600, and the first token TA1, generate a digitally signed first transaction STSa by digitally signing the first transaction TSa with the first private key PrK1, and generate the first remittance information RI3, which includes the first token sender information (U1A1), the first identification information SAD1 of the relay server 600, the first token TA1, the digitally signed first transaction STSa, and the first public key PuK1. In other words, the first token remittance electronic wallet 221 performs remittance with the relay server 600 as a receiver.

When the first user performs publication for the relay server 600, the relay server 600 is a receiver. When the relay server 600 performs publication for the second user, the relay server 600 is a sender.

According to embodiments, information for generating the first remittance information RI3 and information for generating the first message MSGa may be separately input to the first token remittance electronic wallet 221.

When the second user inputs second token sender information (U2A2), second token receiver information (U1A2), and the second token TA2 into the second token remittance electronic wallet 323, the second token remittance electronic wallet 323 generates second remittance information RI4 including second identification information SAD2 of the relay server 600, which is already known to the second token remittance electronic wallet 323, digitally signs the second remittance information RI4 with the private key thereof, publishes digitally signed second remittance information on the second blockchain network 500 in operation S520, and generates and transmits a second message MSGb to the second token processing electronic wallet 623 in operation S522.

The second remittance information RI4 includes the second token sender information (U2A2), the second identification information SAD2 of the relay server 600, and the second token TA2. The second message MSGb includes the second token sender information (U2A2), the second token receiver information (U1A2), and the second token TA2. For example, the second identification information SAD2 is unique information for allowing the relay server 600 to be identified in the second blockchain network 500.

According to embodiments, the second token remittance electronic wallet 323 may create a second transaction, which includes the second token sender information (U2A2), the second identification information SAD2 of the relay server 600, and the second token TA2, generate a digitally signed second transaction STSb by digitally signing the second transaction TSb with the second private key PrK2, and generate the second remittance information RI4, which includes the second token sender information (U2A2), the second identification information SAD2 of the relay server 600, the second token TA2, the digitally signed second transaction STSb, and the second public key PuK2. In other words, the second token remittance electronic wallet 323 performs remittance with the relay server 600 as a receiver.

According to embodiments, information for generating the second remittance information RI4 and information for generating the second message MSGb may be separately input to the second token remittance electronic wallet 323.

The blockchain node 410 receives (or picks up) the first remittance information RI3 published by the first token remittance electronic wallet 221, generates a next block NB next to an existing block CB, and stores the first remittance information RI3 in the next block NB.

The blockchain node 510 receives (or picks up) the second remittance information RI4 published by the second token remittance electronic wallet 323, generates a next block NB next to an existing block CB, and stores the second remittance information RI4 in the next block NB.

The first token processing electronic wallet 621 monitors whether the first remittance information RI3 is published on the first blockchain network 400 in operation S530. When the first remittance information RI3 is published, the first token processing electronic wallet 621 reads the first remittance information RI3 and transmits the first message MSGa to the first token receipt electronic wallet 321, which corresponds to the first token receiver information (U2A1) included in the first message MSGa, in operation S532.

Because the second user already knows the first token TA1 that has been agreed between the second user and the first user, when the second user verifies the first message MSGa through the first token receipt electronic wallet 321, the first token receipt electronic wallet 321 generates the first acknowledgement signal ACK1, based on the verification input (or processed) by the second user, and transmits the first acknowledgement signal ACK1 to the first token processing electronic wallet 621 in operation S534. The first token processing electronic wallet 621 transmits the first acknowledgement signal ACK1 to the third control module 625.

Instead of operations S532 and S534 in FIG. 10, operation S412 in FIG. 9 may be applied to the embodiment of FIG. 10. Instead of operations S542 and S544 in FIG. 10, operation S422 in FIG. 9 may be applied to the embodiment of FIG. 10. In this case, the first token processing electronic wallet 621 may perform operation S560 after receiving information about the first token TA1, and the second token processing electronic wallet 623 may perform operation S570 after receiving information about the second token TA2.

The second token processing electronic wallet 623 monitors whether the second remittance information RI4 is published on the second blockchain network 500 in operation S540. When the second remittance information RI4 is published, the second token processing electronic wallet 623 reads the second remittance information RI4 and transmits the second message MSGb to the second token receipt electronic wallet 223, which corresponds to the second token receiver information (U1A2) included in the second message MSGb, in operation S542.

Because the first user already knows the second token TA2 that has been agreed between the first user and the second user, when the first user verifies the second message MSGb through the second token receipt electronic wallet 223, the second token receipt electronic wallet 223 generates the second acknowledgement signal ACK2, based on the verification input (or processed) by the first user, and transmits the second acknowledgement signal ACK2 to the second token processing electronic wallet 623 in operation S544. The second token processing electronic wallet 623 transmits the second acknowledgement signal ACK2 to the third control module 625.

The third control module 625, which identifies a coincidence of exchange agreement, checks whether all of the first acknowledgement signal ACK1 and the second acknowledgement signal ACK2 have been received in operation S550.

After all of the first and second acknowledgement signals ACK1 and ACK2 are received (i.e., when there is no problem in exchanging the tokens TA1 and TA2), the third control module 625 generates and transmits a publish instruction signal to the first and second token processing electronic wallets 621 and 623.

In response to the publish instruction signal, the first token processing electronic wallet 621 generates and publishes, for the second user, third remittance information RI5 on the first blockchain network 400 in operation S560. In other words, the first token processing electronic wallet 621 digitally signs the third remittance information RI5 with the private key thereof and publishes digitally signed third remittance information on the first blockchain network 400 in operation S560. The third remittance information RI5 includes the first identification information SAD1 of the relay server 600, the first token receiver information (U2A1), and the first token TA1.

The first token receipt electronic wallet 321 monitors whether the third remittance information RI5 is published on the first blockchain network 400 in operation S580. When the third remittance information RI5 is published on the first blockchain network 400, the first token receipt electronic wallet 321 reads the third remittance information RI5 from the blockchain node 410.

In response to the publish instruction signal, the second token processing electronic wallet 623 generates and publishes, for the first user, fourth remittance information RI6 on the second blockchain network 500 in operation S570. In other words, the second token processing electronic wallet 623 digitally signs the fourth remittance information RI6 with the private key thereof and publishes digitally signed fourth remittance information on the second blockchain network 500 in operation S570. The fourth remittance information RI5 includes the second identification information SAD2 of the relay server 600, the second token receiver information (U1A2), and the second token TA2.

The second token receipt electronic wallet 223 monitors whether the fourth remittance information RI6 is published on the second blockchain network 500 in operation S590. When the fourth remittance information RI6 is published on the second blockchain network 500, the second token receipt electronic wallet 223 reads the fourth remittance information RI6 from the blockchain node 510.

Each of pieces of information (RI3, RI4, MSGa, MSGb, RI5, and RI6) includes sender information, receiver information, and a token amount.

While this present disclosure has been described with reference to embodiments shown in the drawings, it will be understood by those of ordinary skill in the art that various changes in form and details may be made therein. Therefore, the scope of the present disclosure will be defined by the technical ideas of the appended claims.

### INDUSTRIAL APPLICABILITY

The present disclosure may be used for a server, an operation method of the server relaying token exchange, and an electronic wallet stored in a computer-readable medium.

## Claims

1. An operation method of a server relaying token exchange, the operation method comprising:
receiving, from a first computing device, first token remittance information for remittance of a first token used in a first blockchain network;
receiving, from a second computing device, second token remittance information for remittance of a second token used in a second blockchain network;
determining whether exchange agreement coincides between the first token and the second token, based on the first token remittance information and the second token remittance information; and
transmitting the first token remittance information to the second computing device and the second token remittance information to the first computing device when the exchange agreement is determined to coincide between first and second tokens.

2. The operation method of claim 1, wherein the exchange agreement is determined to coincide between first and second tokens when reception of the first token remittance information and the second token remittance information is identified.

3. The operation method of claim 1, further comprising:
receiving, from the first computing device, first receipt information including a fourth token; and
receiving, from the second computing device, second receipt information including a third token,
wherein the determining of whether the exchange agreement coincides between the first token and the second token includes determining the exchange agreement to coincide therebetween when the first token coincides with the third token and the second token coincides with the fourth token.

4. The operation method of claim 1, wherein the determining of whether the exchange agreement coincides between the first token and the second token includes:
generating and transmitting, to the second computing device, first token verification information including the first token;
generating and transmitting, to the first computing device, second token verification information including the second token;
receiving a first acknowledgement signal generated by the second computing device based on an input of a second user verifying the first token verification information;
receiving a second acknowledgement signal generated by the first computing device based on an input of a first user verifying the second token verification information; and
determining the exchange agreement to coincide between the first and second tokens when reception of the first and second acknowledgement signals is identified.

5. The operation method of claim 1, wherein the determining of whether the exchange agreement coincides between the first token and the second token includes:
receiving, from the second computing device, a first message including information about the first token;
receiving, from the first computing device, a second message including information about the second token; and
determining the exchange agreement to coincide between the first and second tokens when the first token included in the first token remittance information coincides with the first token included in the first message and the second token included in the second token remittance information coincides with the second token included in the second message.

6. A computer-readable medium having recorded thereon a program for executing the operation method of claim 1 on a computer.

7. An electronic wallet stored in a computer-readable medium, the electronic wallet configured to:
receive, from a first computing device, first token remittance information for remittance of a first token used in a first blockchain network;
receive, from a second computing device, second token remittance information for remittance of a second token used in a second blockchain network;
determine whether exchange agreement coincides between the first token and the second token, based on the first token remittance information and the second token remittance information; and
transmit the first token remittance information to the second computing device and the second token remittance information to the first computing device when the exchange agreement is determined to coincide between the first and second tokens.

8. The electronic wallet of claim 7, wherein the electronic wallet comprises:
a controller;
a first token processing electronic wallet configured to receive the first token remittance information, generate and transmit a first signal indicating the reception of the first token remittance information to the controller, and transmit the first token remittance information to the second computing device in response to a transmission instruction signal; and
a second token processing electronic wallet configured to receive the second token remittance information, generate and transmit a second signal indicating the reception of the second token remittance information to the controller, and transmit the second token remittance information to the first computing device in response to the transmission instruction signal,
wherein the controller is configured to generate the transmission instruction signal in response to the first and second signals.

9. The electronic wallet of claim 7, wherein the electronic wallet comprises:
a controller;
a first token processing electronic wallet configured to generate first token verification information including the first token, based on the first token remittance information, transmit the first token verification information to the second computing device, receive a first acknowledgement signal generated by the second computing device based on an input of a second user verifying the first token verification information, transmit the first acknowledgement signal to the controller, and transmit the first token remittance information to the second computing device in response to a transmission instruction signal; and
a second token processing electronic wallet configured to generate second token verification information including the second token, based on the second token remittance information, transmit the second token verification information to the first computing device, receive a second acknowledgement signal generated by the first computing device based on an input of a first user verifying the second token verification information, transmit the second acknowledgement signal to the controller, and transmit the second token remittance information to the first computing device in response to the transmission instruction signal,
wherein the controller is configured to generate the transmission instruction signal in response to the first and second acknowledgement signals.

10. The electronic wallet of claim 7, wherein the electronic wallet comprises:
a controller;
a first token processing electronic wallet configured to receive the first token remittance information, receive first information about the first token from the second computing device, determine whether the first token included in the first token remittance information coincides with the first token included in the first information, transmit a first signal indicating coincidence to the controller, and transmit the first token remittance information to the second computing device in response to a transmission instruction signal; and
a second token processing electronic wallet configured to receive the second token remittance information, receive second information about the second token from the first computing device, determine whether the second token included in the second token remittance information coincides with the second token included in the second information, transmit a second signal indicating coincidence to the controller, and transmit the second token remittance information to the first computing device in response to the transmission instruction signal,
wherein the controller is configured to generate the transmission instruction signal in response to the first and second signals.

11. The electronic wallet of claim 7, wherein the electronic wallet comprises:
a controller;
a first token processing electronic wallet configured to receive and transmit the first token remittance information to the controller, receive and transmit first information about the first token from the second computing device to the controller, and transmit the first token remittance information to the second computing device in response to a transmission instruction signal; and
a second token processing electronic wallet configured to receive and transmit the second token remittance information to the controller, receive and transmit second information about the second token from the first computing device to the controller, and transmit the second token remittance information to the first computing device in response to the transmission instruction signal,
wherein the controller is configured to generate the transmission instruction signal when the first token included in the first token remittance information coincides with the first token included in the first information and the second token included in the second token remittance information coincides with the second token included on the second information.

12. A server comprising:
a processor; and
a computer-readable medium having recorded thereon a program for executing the operation method of claim 1.

13. A method of providing a token exchange relay service by using a relay server, the method comprising:
receiving, by the relay server, first token remittance information for remittance of a first token from a first computing device, the first token being used in a first blockchain network;
receiving, by the relay server, second token remittance information for remittance of a second token from a second computing device, the second token being used in a second blockchain network;
determining, by the relay server, whether exchange agreement coincides between the first token and the second token, based on the first token remittance information and the second token remittance information; and
transmitting, by the relay server, the first token remittance information to the second computing device and the second token remittance information to the first computing device, when the exchange agreement is determined to coincide between the first and second tokens.

14. The method of claim 13, further comprising:
receiving and publishing, by the first computing device, the second token remittance information on the second blockchain network; and
receiving and publishing, by the second computing device, the first token remittance information on the first blockchain network.

15. The method of claim 14, wherein the determining of whether the exchange agreement coincides between the first token and the second token includes:
extracting, by the relay server, first token sender information, first token receiver information, and the first token from the first token remittance information and generating and transmitting, by the relay server, first token verification information to the second computing device, the first token verification information including the first token sender information, the first token receiver information, and the first token;
generating, by the second computing device, a first acknowledgement signal based on an input of a second user verifying the first token verification information and transmitting, by the second computing device, the first acknowledgement signal to the relay server;
extracting, by the relay server, second token sender information, second token receiver information, and the second token from the second token remittance information and generating and transmitting, by the relay server, second token verification information to the first computing device, the second token verification information including the second token sender information, the second token receiver information, and the second token;
generating, by the first computing device, a second acknowledgement signal based on an input of a first user verifying the second token verification information and transmitting, by the first computing device, the second acknowledgement signal to the relay server; and
determining, by the relay server, the exchange agreement to coincide between the first and second tokens when reception of all of the first and second acknowledgement signals is identified.

16. The method of claim 14, wherein the determining of whether the exchange agreement coincides between the first token and the second token includes:
receiving, by the relay server, first information about the first token from the second computing device;
receiving, by the relay server, second information about the second token from the first computing device; and
determining, by the relay server, the exchange agreement to coincide between the first and second tokens when the first token included in the first token remittance information coincides with the first token included on the first information and the second token included in the second token remittance information coincides with the second token included in the second information.

17. The method of claim 13, wherein the relay server is configured to:
receive the first token remittance information from a first token remittance electronic wallet executed on the first computing device; and
receive the second token remittance information from a second token remittance electronic wallet executed on the second computing device,
the first token remittance electronic wallet performs a lock function for guaranteeing payment of the first token, and
the second token remittance electronic wallet performs a lock function for guaranteeing payment of the second token.

18. An operation method of a server relaying token exchange, the operation method comprising:
receiving, from a first computing device, first token remittance information for remittance of a first token used in a first blockchain network;
receiving, from a second computing device, second token remittance information for remittance of a second token used in a second blockchain network;
determining whether exchange agreement coincides between the first token and the second token, based on the first token remittance information and the second token remittance information; and
publishing the first token remittance information and the second token remittance information respectively on the first blockchain network and the second blockchain network when the exchange agreement is determined to coincide between the first and second tokens.

19. The operation method of claim 18, wherein the exchange agreement is determined to coincide between the first and second tokens when reception of the first token remittance information and the second token remittance information is identified.

20. The operation method of claim 18, wherein the determining of whether the exchange agreement coincides between the first token and the second token includes:
generating and transmitting, to the second computing device, first token verification information including the first token;
generating and transmitting, to the first computing device, second token verification information including the second token;
receiving a first acknowledgement signal generated by the second computing device based on an input of a second user verifying the first token verification information;
receiving a second acknowledgement signal generated by the first computing device based on an input of a first user verifying the second token verification information; and
determining the exchange agreement to coincide between the first and second tokens when reception of the first and second acknowledgement signals is identified.

21. A computer-readable medium having recorded thereon a program for executing the operation method of claim 18 on a computer.

22. An electronic wallet stored in a computer-readable medium, the electronic wallet configured to:
receive, from a first computing device, first token remittance information for remittance of a first token used in a first blockchain network;
receive, from a second computing device, second token remittance information for remittance of a second token used in a second blockchain network;
determine whether exchange agreement coincides between the first token and the second token, based on the first token remittance information and the second token remittance information; and
publish the first token remittance information and the second token remittance information respectively on the first blockchain network and the second blockchain network when the exchange agreement is determined to coincide between the first and second tokens.

23. The electronic wallet of claim 22, wherein the electronic wallet comprises:
a controller;
a first token processing electronic wallet configured to receive the first token remittance information, generate and transmit a first signal indicating the reception of the first token remittance information to the controller, and publish the first token remittance information on the first blockchain network in response to a publish instruction signal; and
a second token processing electronic wallet configured to receive the second token remittance information, generate and transmit a second signal indicating the reception of the second token remittance information to the controller, and publish the second token remittance information on the second blockchain network in response to the publish instruction signal,
wherein the controller is configured to generate the publish instruction signal in response to the first and second signals.

24. The electronic wallet of claim 22, wherein the electronic wallet comprises:
a controller;
a first token processing electronic wallet configured to generate first token verification information including the first token, based on the first token remittance information, transmit the first token verification information to the second computing device, receive a first acknowledgement signal generated by the second computing device based on an input of a second user verifying the first token verification information, transmit the first acknowledgement signal to the controller, and publish the first token remittance information on the first blockchain network in response to a publish instruction signal; and
a second token processing electronic wallet configured to generate second token verification information including the second token, based on the second token remittance information, transmit the second token verification information to the first computing device, receive a second acknowledgement signal generated by the first computing device based on an input of a first user verifying the second token verification information, transmit the second acknowledgement signal to the controller, and publish the second token remittance information on the second blockchain network in response to the publish instruction signal,
wherein the controller is configured to generate the publish instruction signal in response to the first and second acknowledgement signals.

25. A server comprising:
a processor; and
a computer-readable medium having recorded thereon a program for executing the operation method of claim 18.

26. A method of providing a token exchange relay service by using a relay server, the method comprising:
receiving, by the relay server, first token remittance information for remittance of a first token from a first computing device, the first token being used in a first blockchain network;
receiving, by the relay server, second token remittance information for remittance of a second token from a second computing device, the second token being used in a second blockchain network;
determining, by the relay server, whether exchange agreement coincides between the first token and the second token, based on the first token remittance information and the second token remittance information; and
publishing, by the relay server, the first token remittance information and the second token remittance information respectively on the first blockchain network and the second blockchain network, when the exchange agreement is determined to coincide between the first and second tokens.

27. The method of claim 26, further comprising:
generating and transmitting, by the relay server, a first notification signal to the second computing device, the first notification signal indicating that the first token remittance information is published on the first blockchain network; and
generating and transmitting, by the relay server, a second notification signal to the first computing device, the second notification signal indicating that the second token remittance information is published on the second blockchain network.

28. The method of claim 26, wherein the determining of whether the exchange agreement coincides between the first token and the second token includes:
generating, by the relay server, first token verification information including the first token, based on the first token remittance information, and transmitting, by the relay server, the first token verification information to the second computing device;
transmitting, by the second computing device, a first acknowledgement signal to the relay server, the first acknowledgement signal being generated based on an input of a second user verifying the first token verification information;
generating, by the relay server, second token verification information including the second token, based on the second token remittance information, and transmitting, by the relay server, the second token verification information to the first computing device;
transmitting, by the first computing device, a second acknowledgement signal to the relay server, the second acknowledgement signal being generated based on an input of a first user verifying the second token verification information; and
determining, by the relay server, the exchange agreement to coincide between the first and second tokens when the first and second acknowledgement signals are received.

29. The method of claim 26, wherein the relay server is configured to:
receive the first token remittance information from a first token remittance electronic wallet executed on the first computing device; and
receive the second token remittance information from a second token remittance electronic wallet executed on the second computing device,
the first token remittance electronic wallet performs a lock function for guaranteeing payment of the first token, and
the second token remittance electronic wallet performs a lock function for guaranteeing payment of the second token.

30. An operation method of a server relaying token exchange, the operation method comprising:
receiving, from a first computing device, a first message including first token sender information, first token receiver information, and a first token;
monitoring whether first remittance information is published on a first blockchain network and reading the first remittance information from the first blockchain network as a result of the monitoring, the first remittance information including the first token sender information, first identification information of the server, and the first token;
transmitting the first message to a second computing device, based on the first token receiver information included in the first message; and
receiving a first acknowledgement signal generated by the second computing device based on an input of a second user verifying the first message.

31. The operation method of claim 30, further comprising:
receiving, from the second computing device, a second message including second token sender information, second token receiver information, and a second token;
monitoring whether second remittance information is published on a second blockchain network and reading the second remittance information from the second blockchain network as a result of the monitoring, the second remittance information including the second token sender information, second identification information of the server, and the second token;
transmitting the second message to the first computing device, based on the second token receiver information included in the second message; and
receiving a second acknowledgement signal generated by the first computing device based on an input of a first user verifying the second message.

32. The operation method of claim 31, further comprising:
checking whether the first and second acknowledgement signals have been received;
generating and publishing third remittance information on the first blockchain network after the first and second acknowledgement signals have been received, the third remittance information including the first identification information of the server, the first token receiver information, and the first token; and
generating and publishing fourth remittance information on the second blockchain network after the first and second acknowledgement signals have been received, the fourth remittance information including the second identification information of the server, the second token receiver information, and the second token,
wherein the first identification information allows the server to be identified in the first blockchain network, and
the second identification information allows the server to be identified in the second blockchain network.

33. A computer-readable medium having recorded thereon a program for executing the operation method of claim 30 on a computer.

34. An electronic wallet stored in a computer-readable medium, the electronic wallet comprising instructions for allowing a computing device to perform operations, the operations comprising:
an operation of receiving, from a first computing device, a first message including first token sender information, first token receiver information, and a first token;
an operation of monitoring whether first remittance information is published on a first blockchain network and reading the first remittance information from the first blockchain network as a result of the monitoring, the first remittance information including the first token sender information, first identification information of a server, and the first token;
transmitting the first message to a second computing device, based on the first token receiver information included in the first message; and
receiving a first acknowledgement signal generated by the second computing device based on an input of a second user verifying the first message.

35. The electronic wallet of claim 34, wherein the operations further comprises:
an operation of receiving, from the second computing device, a second message including second token sender information, second token receiver information, and a second token;
an operation of monitoring whether second remittance information is published on a second blockchain network and reading the second remittance information from the second blockchain network as a result of the monitoring, the second remittance information including the second token sender information, second identification information of the server, and the second token;
an operation of transmitting the second message to the first computing device based on the second token receiver information included in the second message;
an operation of receiving a second acknowledgement signal generated by the first computing device based on an input of a first user verifying the second message;
an operation of checking whether the first and second acknowledgement signals have been received;
an operation of generating and publishing third remittance information on the first blockchain network after the first and second acknowledgement signals have been received, the third remittance information including the first identification information of the server, the first token receiver information, and the first token; and
an operation of generating and publishing fourth remittance information on the second blockchain network after the first and second acknowledgement signals have been received, the fourth remittance information including the second identification information of the server, the second token receiver information, and the second token.

36. A server comprising:
a processor; and
a computer-readable medium having recorded thereon a program for executing the operation method of claim 30.

37. A method of providing a token exchange relay service by using a relay server, the method comprising:
receiving, by the relay server, a first message from a first computing device, the first message including first token sender information, first token receiver information, and a first token;
monitoring, by the relay server, whether first remittance information is published on a first blockchain network and reading, by the relay server, the first remittance information from the first blockchain network as a result of the monitoring, the first remittance information including the first token sender information, first identification information of the relay server, and the first token;
transmitting, by the relay server, the first message to a second computing device, based on the first token receiver information included in the first message; and
receiving, by the relay server, a first acknowledgement signal generated by the second computing device based on an input of a second user verifying the first message.

38. The method of claim 37, further comprising:
receiving, by the relay server, a second message from the second computing device, the second message including second token sender information, second token receiver information, and a second token;
monitoring, by the relay server, whether second remittance information is published on a second blockchain network and reading, by the relay server, the second remittance information from the second blockchain network as a result of the monitoring, the second remittance information including the second token sender information, second identification information of the relay server, and the second token;
transmitting, by the relay server, the second message to the first computing device, based on the second token receiver information included in the second message; and
receiving, by the relay server, a second acknowledgement signal generated by the first computing device based on an input of a first user verifying the second message.

39. The method of claim 38, further comprising:
checking whether the first and second acknowledgement signals have been received;
generating and publishing third remittance information on the first blockchain network after the first and second acknowledgement signals have been received, the third remittance information including the first identification information of the relay server, the first token receiver information, and the first token; and
generating and publishing fourth remittance information on the second blockchain network after the first and second acknowledgement signals have been received, the fourth remittance information including the second identification information of the relay server, the second token receiver information, and the second token.

40. The method of claim 37, wherein the relay server is configured to:
receive the first token remittance information from a first token remittance electronic wallet executed on the first computing device; and
receive the second token remittance information from a second token remittance electronic wallet executed on the second computing device,
the first token remittance electronic wallet performs a lock function for guaranteeing payment of the first token, and
the second token remittance electronic wallet performs a lock function for guaranteeing payment of the second token.
